(19)

Europäisches Patentamt
European Patent Office
Office européen des brevets

(11) **EP 4 693 688 A1**

(12) **EUROPEAN PATENT APPLICATION**
published in accordance with Art. 153(4) EPC

(43) Date of publication:
**11.02.2026 Bulletin 2026/07**

(21) Application number: **23931857.9**

(22) Date of filing: **21.12.2023**

(51) International Patent Classification (IPC):
*H01M 50/449* (2021.01)    *H01M 50/443* (2021.01)
*H01M 50/446* (2021.01)    *H01M 10/0525* (2010.01)

(52) Cooperative Patent Classification (CPC):
**B01J 20/2803; B01J 20/0229; B01J 20/06;**
**B01J 20/28016; B01J 20/3274; B01J 20/3293;**
**H01M 10/0525; H01M 50/403; H01M 50/414;**
**H01M 50/431; H01M 50/434; H01M 50/443;**
**H01M 50/446; Y02E 60/10**

(86) International application number:
**PCT/CN2023/140740**

(87) International publication number:
**WO 2024/207812 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.04.2023   CN 202310369612**

(71) Applicant: **Contemporary Amperex Technology
Co., Limited
Ningde, Fujian 352100 (CN)**

(72) Inventors:
• **DENG, Bokai
  Ningde, Fujian 352100 (CN)**
• **WANG, Yaohui
  Ningde, Fujian 352100 (CN)**
• **HUANG, Siying
  Ningde, Fujian 352100 (CN)**
• **OUYANG, Chuying
  Ningde, Fujian 352100 (CN)**
• **SUN, Chengdong
  Ningde, Fujian 352100 (CN)**
• **YANG, Jianrui
  Ningde, Fujian 352100 (CN)**
• **WANG, Zhaoguang
  Ningde, Fujian 352100 (CN)**

(74) Representative: **Gong, Jinping
  CocreateIP
  Neumarkter Straße 21
  81673 München (DE)**

(54) **BATTERY SEPARATOR AND MANUFACTURING METHOD THEREFOR, SECONDARY BATTERY, AND ELECTRIC DEVICE**

(57)    The present application relates to the field of batteries, and discloses a battery separator and a manufacturing method therefor, a secondary battery, and an electric device. The battery separator comprises a base membrane and a coating provided on the surface of the base membrane. The material of the coating comprises a magnetic heavy metal ion adsorbent. The saturated adsorption capacity of the magnetic heavy metal ion adsorbent is 30-300 mg/g. According to the present application, by adding the magnetic heavy metal ion adsorbent into the coating of the battery separator, the coating capable of adsorbing heavy metal ions is arranged on the battery separator, so that the battery separator is modified, and the modified battery separator has a heavy metal adsorption function and can effectively adsorb heavy metal ion impurities.

FIG. 1

EP 4 693 688 A1

**Description**

REFERENCE TO RELATED APPLICATION

The present application claims priority to Chinese Patent Application No. 202310369612.7 filed to China National Intellectual Property Administration on April 7, 2023, and entitled "BATTERY SEPARATOR AND PREPARATION METHOD THEREFOR, SECONDARY BATTERY, AND ELECTRIC DEVICE", the content of which is incorporated herein by reference in its entirety.

TECHNICAL FIELD

The present application relates to the field of batteries, and in particular, to a battery separator and a preparation method therefor, a secondary battery, and an electric device.

BACKGROUND

In the preparation process of materials of secondary batteries (such as lithium batteries), metal impurities may be doped and introduced when positive and negative electrode materials are modified. The reduction potential of metal impurity ions is lower than that of lithium ions. The metal ions at a certain concentration not only decrease the reversible specific capacity of the lithium batteries, but the precipitation of the metal impurity ions during the charging and discharging process may also trigger adverse effects such as internal short circuits, local heat generation, shortened cycle life, reduced capacity, and increased self-discharge.

SUMMARY

The present application mainly aims to provide a battery separator and a preparation method therefor, a secondary battery, and an electric device, and is intended to provide a modified battery separator capable of effectively adsorbing heavy metal ion impurities, thus enhancing the capability of the battery separator to adsorb heavy metal ions, alleviating reversible specific capacity reduction and safety hazards such as short circuits of the battery caused by the metal ion impurities, and thereby enhancing the use safety and the service life of the battery.

In a first aspect, the present application provides a battery separator. The battery separator includes a base film and a coating disposed on the surface of the base film, where the material of the coating includes a magnetic heavy metal ion adsorbent, and the saturation adsorption capacity of the magnetic heavy metal ion adsorbent is 30-300 mg/g.

In the technical solution of the embodiment of the present application, the magnetic heavy metal ion adsorbent with the saturation adsorption capacity of 30-300 mg/g is added to the coating of the battery separator to modify the battery separator. The modified battery separator has a heavy metal adsorption function and can effectively adsorb heavy metal ion impurities and alleviate reversible specific capacity reduction and safety hazards such as short circuits of the battery caused by the metal ion impurities; meanwhile, after modification, the presence of a magnetic field on the surface of the battery separator can accelerate the speed of $Li^+$ passing through the battery separator and help achieve uniform distribution of $Li^+$, such that "lithium dendrite" caused by the excessively high local concentration of $Li^+$ is mitigated, thereby alleviating battery short circuits caused by "lithium dendrite", and enhancing the use safety and the service life of the battery.

In some embodiments, the magnetic heavy metal ion adsorbent is in the form of a particle, the magnetic heavy metal ion adsorbent includes an inner core and an outer wall wrapped outside the inner core, the material of the inner core includes a magnetic material, and the material of the outer wall includes an adsorption material. The magnetic heavy metal ion adsorbent with a core-shell structure formed by the magnetic material and the adsorption material is conducive to improving the adsorption effect of the magnetic heavy metal ion adsorbent on heavy metal ions.

In some embodiments, the magnetic material includes at least one of triiron tetraoxide, ferric oxide, and an iron-nickel-cobalt-based alloy. By selecting at least one of the above magnetic materials as the inner core material of the magnetic heavy metal ion adsorbent, the adsorption effect of the magnetic heavy metal ion adsorbent on heavy metal ion impurities is further improved.

In some embodiments, the adsorption material includes at least one of chitosan, alginate, and cellulose. By selecting at least one of the above materials as the outer wall material of the magnetic heavy metal ion adsorbent, the adsorption effect of the magnetic heavy metal ion adsorbent on heavy metal ion impurities is further improved.

In some embodiments, the thickness of the outer wall is 0.01-1 $\mu$m. By setting the thickness of the outer wall within the range of 0.01-1 $\mu$m, the adsorption effect of the magnetic heavy metal ion adsorbent on heavy metal ion impurities can be guaranteed.

In some embodiments, the particle size of the magnetic heavy metal ion adsorbent is 0.1-10 $\mu$m. By setting the

particle size of the magnetism heavy metal ion adsorbent within the range of 0.1-10 $\mu$m, the final adsorption effect of the magnetic heavy metal ion adsorbent on heavy metal ion impurities can be guaranteed, and the dispersion uniformity of the magnetic heavy metal ion adsorbent in the coating of the battery separator can be improved.

In some embodiments, the magnetic heavy metal ion adsorbent is used for adsorbing at least one of a copper ion and an iron ion. The formed coating of the battery separator to which the magnetic heavy metal ion adsorbent is added exhibits a good adsorption effect on at least the copper ions and iron ions.

In some embodiments, the material of the coating further includes a binder. With the addition of the binder, the coating is better bonded to the base film and is less prone to peeling.

In some embodiments, the binder includes at least one of polyacrylate, acrylic acid, and carboxymethyl cellulose. Selecting at least one of the above substances as the binder in the battery separator is conducive to guaranteeing the adhesive strength between the coating prepared by the battery separator and the battery separator.

In some embodiments, the mass ratio of the magnetic heavy metal ion adsorbent to the binder is 1:1.5-4. By controlling the addition amount of the magnetic heavy metal ion adsorbent and the binder within this range, the adsorption effect of the coating on heavy metal ions and the adhesion between the coating and the base film can both be taken into account.

In some embodiments, the material of the coating further includes a heat-resistant material. With the addition of the heat-resistant material, the thermal shrinkage resistance of the battery separator can be improved.

In some embodiments, the heat-resistant material includes an inorganic oxide or a polymer material. The inorganic oxide includes at least one of boehmite, aluminum oxide, barium sulfate, magnesium oxide, magnesium hydroxide, silica, tin dioxide, titanium oxide, calcium oxide, zinc oxide, zirconium oxide, yttrium oxide, nickel oxide, cerium oxide, zirconium titanate, barium titanate, and magnesium fluoride. The polymer material includes at least one of polyvinylidene fluoride, polysulfonamide, polyacrylonitrile, and polymethyl methacrylate. Selecting at least one of the above inorganic oxides or at least one of the above polymer materials as the heat-resistant material in the battery separator is effective in improving the heat resistance of the battery separator.

In some embodiments, the mass ratio of the magnetic heavy metal ion adsorbent to the heat-resistant material is 1:3-10. By controlling the addition proportion of the magnetic heavy metal ion adsorbent and the heat-resistant material within the above range, the adsorption effect of the coating on heavy metal ions and the heat resistance thereof can both be taken into account.

In some embodiments, the battery separator further includes a dispersant. The addition of the dispersant is helpful in adjusting the dispersion condition of solid substances in the coating and is conducive to the preparation of a more uniform coating.

In some embodiments, the dispersant includes at least one of polyethylene glycol and polyacrylamide. Selecting at least one of the above substances as the dispersant in the coating is conducive to improving the dispersion effect of the solid substances such as the magnetic heavy metal ion adsorbent, the binder, and/or the heat-resistant material and to guaranteeing the dispersion uniformity of the solid substances in the battery separator.

In some embodiments, the mass of the dispersant accounts for 0.4%-1.5% of the total solid mass in the coating. Controlling the addition amount of the dispersant within this range effectively improves the dispersibility of the solid substances in the coating, the solidification molding performance of the coating, and the like.

In some embodiments, the material of the base film includes at least one of polyolefin, polyether, polyetheretherketone, polyimide, polytetrafluoroethylene, polyvinyl fluoride, polyvinylidene fluoride, polyvinylidene chloride, a polyethylene-propylene copolymer, and a C-F bond-containing copolymer. By selecting at least one of the above substances as the material for the preparation of the base film, the obtained battery separator exhibits superior overall performance.

In a second aspect, the present application provides a preparation method for the battery separator. The preparation method includes the following steps:

applying a functional slurry on a base film; and

solidifying the functional slurry on the base film to form a coating, thus obtaining the battery separator.

In the technical solution of the embodiments of the present application, by applying the functional slurry on the base film and solidifying to form the coating on the base film while allowing the material of the coating to include a magnetic heavy metal ion adsorbent with a saturation adsorption capacity of 30-300 mg/g, a modified battery separator is obtained. The modified battery separator has a good heavy metal adsorption function and can effectively adsorb heavy metal ion impurities and alleviate reversible specific capacity reduction and safety hazards such as short circuits of the battery caused by the metal ion impurities; in addition, after modification, the presence of the magnetic field on the surface of the battery separator can accelerate the speed of Li$^+$ passing through the battery separator and help achieve uniform distribution of Li$^+$, such that "lithium dendrite" caused by the excessively high local concentration of Li$^+$ is mitigated, thereby alleviating battery short circuits caused by "lithium dendrite", and enhancing the use safety and the service life of the battery.

In some embodiments, the solid content of the functional slurry is 40%-45%. By controlling the solid content of the functional slurry within the range of 40%-45%, the solid substances in the functional slurry can be sufficiently dispersed, and the coatability and the solidification molding rate of the slurry can also be improved.

In some embodiments, the step of solidifying the functional slurry on the base film to form the coating includes: drying the base film coated with the functional slurry at a temperature of 40-45 °C for 20-25 s.

By solidifying the battery separator through drying at 40-45 °C for 20-25 s to form the coating on the base film, the formed coating exhibits superior apparent quality, excellent adhesion with the base film, and rapid solidification rate.

In a third aspect, the present application provides a secondary battery. The secondary battery includes the battery separator according to the above embodiments or the battery separator prepared according to the above embodiments.

In a fourth aspect, the present application provides an electric device. The electric device includes the secondary battery according to the above embodiments.

BRIEF DESCRIPTION OF THE DRAWINGS

To more clearly illustrate the technical solutions in the embodiments of the present application or in the prior art, the drawings required for illustrating the embodiments or description of the prior art are briefly described below. Apparently, the drawings in the following description illustrate merely some embodiments of the present application, and those of ordinary skills in the art may still derive other related drawings from these drawings without creative efforts.

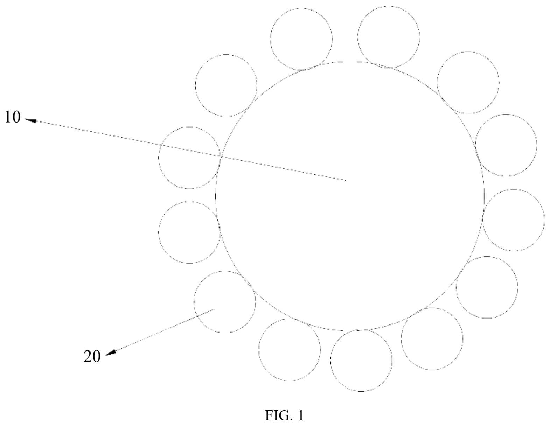

FIG. 1 is a schematic structural diagram of a magnetic heavy metal ion adsorbent according to some embodiments of the present application.

Description of the reference numerals:

| 10 | Inner core | 20 | Outer wall |

The realization of the object, the functional features, and the advantages of the present application will be further described with reference to the drawings.

DETAILED DESCRIPTION

Hereinafter, embodiments of the battery separator and the preparation method therefor, the secondary battery, and the electric device of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it will be appreciated that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" represents an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer $\geq 2$, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

At present, judging from the trends in the market, the application of power batteries is becoming increasingly widespread. Power batteries are not only applied in energy storage power systems such as hydropower, thermal power, wind power and solar power stations, but are also widely applied in electric transportation vehicles such as electric bicycles, electric motorcycles, or electric cars, as well as in military equipment, aerospace, and other fields. As the application of the power batteries becomes broader, the market demand thereof is also increasing.

At present, judging from the trends in the market, the application of power batteries is becoming increasingly widespread. Power batteries are not only applied in energy storage power systems such as hydropower, thermal power, wind power and solar power stations, but are also widely applied in electric transportation vehicles such as electric bicycles, electric motorcycles, or electric cars, as well as in military equipment, aerospace, and other fields. As the application of the power batteries becomes broader, the market demand thereof is also increasing.

In the preparation process of materials of secondary batteries (such as lithium batteries), metal impurities may be doped and introduced when positive and negative electrode materials are modified. The reduction potential of metal impurity ions is lower than that of lithium ions. The metal ions at a certain concentration not only decrease the reversible specific capacity of the lithium batteries, but the precipitation of the metal impurity ions during the charging and discharging process may also trigger adverse effects such as internal short circuits, local heat generation, shortened cycle life, reduced capacity, and increased self-discharge.

In view of the above problems, the inventors have conducted in-depth studies and found that if a battery separator has the function of adsorbing and removing metal impurities, a series of problems caused by the introduction of metal impurities during the modification of positive and negative electrode materials in the prior art can be well solved. Therefore, a method for modifying the battery separator to provide the battery separator with the function of adsorbing heavy metal ion impurities is designed. Specifically, the present application provides a battery separator, a battery separator base film, and a coating disposed on the surface of the base film, where the material of the coating includes a magnetic heavy metal ion adsorbent, and the saturation adsorption capacity of the magnetic heavy metal ion adsorbent is 30-300 mg/g. As used herein, "heavy metals" refer to metals having a density greater than 4.5 g/cm$^3$, including gold, silver, copper, iron, mercury, lead, cadmium, tin, zinc, chromium, vanadium, manganese, and the like.

In the technical solution of the embodiment of the present application, the magnetic heavy metal ion adsorbent with the saturation adsorption capacity of 30-300 mg/g is added to the coating of the battery separator to modify the battery separator. The modified battery separator has a heavy metal adsorption function and can effectively adsorb heavy metal ion impurities and alleviate reversible specific capacity reduction and safety hazards such as short circuits of the battery caused by the metal ion impurities; meanwhile, after modification, the magnetic property of the battery separator results in a magnetic field on the surface, which accelerates the speed of Li$^+$ passing through the battery separator and helps achieve uniform distribution of Li$^+$, such that "lithium dendrite" caused by the excessively high local concentration of Li$^+$ is mitigated, thereby alleviating battery short circuits caused by "lithium dendrite", and enhancing the use safety and the service life of the battery.

In some embodiments, referring to FIG. 1, the magnetic heavy metal ion adsorbent is in the form of a particle and includes an inner core 10 and an outer wall 20 wrapped outside the inner core 10. The material of the inner core 10 includes a magnetic material, and the material of the outer wall 20 includes an adsorption material. The magnetic heavy metal ion adsorbent with a core-shell structure formed by the magnetic material and the adsorption material is conducive to improving the adsorption effect of the magnetic heavy metal ion adsorbent on heavy metal ions.

In some embodiments, the magnetic material includes at least one of triiron tetraoxide, ferric oxide, and an iron-nickel-cobalt-based alloy. Any one of the above substances or a combination of any two or three of the above substances may be selected. By selecting at least one of the above magnetic materials as the inner core material of the magnetic heavy metal ion adsorbent, the adsorption effect of the magnetic heavy metal ion adsorbent on heavy metal ion impurities is further improved and the magnetic heavy metal ion adsorbent exhibits a good adsorption effect on various heavy metal impurities such as copper ions and iron ions, and meanwhile, the effect in accelerating the speed of Li$^+$ passing through the battery separator and helping achieve uniform distribution of Li$^+$ is excellent, thereby effectively restraining the formation of "lithium dendrites".

In some embodiments, the adsorption material includes at least one of chitosan, alginate, and cellulose. Any one of the above substances or a combination of any two or three of the above substances may be selected. By selecting at least one of the above materials as the outer wall material of the magnetic heavy metal ion adsorbent, the adsorption effect of the magnetic heavy metal ion adsorbent on heavy metal ion impurities is further improved.

In some embodiments, the thickness of the outer wall 20 is 0.01-1 $\mu$m. By setting the thickness of the outer wall within the range of 0.01-1 $\mu$m, the size distribution of the inner core 10 and the outer wall 20 is more reasonable, which is conducive to guaranteeing the adsorption effect of the magnetic heavy metal ion adsorbent on heavy metal ion impurities. Meanwhile, the magnetic field on the surface of the battery separator that is generated by the magnetic material also exhibits relatively ideal effect in helping Li$^+$ pass through the battery separator and be uniformly distributed.

In some embodiments, the particle size of the magnetic heavy metal ion adsorbent is 0.1-10 $\mu$m. By setting the particle size of the magnetic heavy metal ion adsorbent within the range of 0.1-10 $\mu$m, in one aspect, the good adsorption effect of the magnetic heavy metal ion adsorbent on heavy metal ion impurities can be guaranteed, and in another aspect, the dispersibility of the magnetic heavy metal ion adsorbent in the battery separator can be improved, thereby further guaranteeing the adsorption effect of the battery separator modified by the battery separator on heavy metal ion impurities, and also improving the coating performance and the forming performance of the battery separator.

In some specific embodiments, taking an example where triiron tetraoxide is the magnetic material and chitosan is the adsorption material, the magnetic heavy metal ion adsorbent can be prepared in the following manner:

chitosan is dissolved in an acetic acid solution and swelled for 30-90 min to obtain a swelling solution;

triiron tetraoxide is added to the obtained swelling solution, and ultrasonic dispersion is performed to obtain a dispersion;

a mixed solvent of cyclohexane and n-hexanol is added to the obtained dispersion liquid, and rapid emulsification is performed by ultrasonic treatment to obtain an emulsion;

pentanediol is added to the obtained emulsion, and the resulting mixture is stirred and reacted for 10-30 min, then adjusted to pH value of 8-9, and then stirred and reacted for 1-4 h; after the reaction is finished, the solid product is isolated from the reaction system, washed, and dried to prepare the magnetic heavy metal ion adsorbent with a core-shell structure resulting from the wrapping of the surface of triiron tetraoxide by chitosan.

In some specific embodiments, the concentration of the acetic acid solution is 2-5%; the mass ratio of chitosan to triiron tetraoxide is 2-5:3-9; 1-3 mL of the mixed solvent is correspondingly added to every 2-5 g of chitosan, where the volume ratio of cyclohexane to n-hexanol in the mixed solvent is 2: 1; 1-3 mL of pentanediol is correspondingly added to every 2-5 g of chitosan.

In some specific embodiments, for the ultrasonic dispersion performed after triiron tetraoxide is added to the swelling solution, the ultrasonic frequency is 30-40 kHz, and the ultrasonic dispersion time is 10-30 min; for the ultrasonic treatment performed after the mixed solvent is added to the dispersion, the ultrasonic frequency is 80-100 kHz, and the ultrasonic time is 10-30 min.

In some specific embodiments, the process of stirring the emulsion for reaction after pentanediol is added is performed at room temperature. The "room temperature" here means that when the operating environment temperature is 15-30 °C, additional heating or cooling treatment may not be required, and when the operating environment temperature exceeds 15-30 °C, heating or cooling treatment may be applied to the reaction system.

In some specific embodiments, the way for isolating the solid product from the reaction system includes suction filtration; the step of washing the isolated solid product includes fully washing the isolated solid product with absolute ethanol, deionized water, and acetone sequentially; the way for drying the washed solid product is drying the solid product in a vacuum drying oven at 60-80 °C for 25-35 min.

In some embodiments, when other magnetic materials are selected as the inner core and other adsorption materials are selected as the outer wall, reference may also be made to the above manner for preparing the magnetic heavy metal ion adsorbent with a core-shell structure resulting from wrapping of the surface of triiron tetraoxide by chitosan, which is not described in detail here.

The magnetic heavy metal ion adsorbent according to the embodiments of the present application may be used for adsorbing conventional heavy metal ions, and in some embodiments, the magnetic heavy metal ion adsorbent is used for adsorbing at least one of a copper ion and an iron ion. Experiments prove that the battery separator added with the magnetic heavy metal ion adsorbent in the embodiments of the present application exhibits a good adsorption effect on at least copper ions and iron ions, where the adsorption rate for the copper ions can reach 97.7%, and the adsorption rate for the iron ions can reach 82.1%.

In some embodiments, the material of the coating further includes a binder. With the addition of the binder, the adhesion between the coating and the base film can be improved, such that the coating is better bonded to the base film and is less prone to peeling, thus improving the structural stability of the battery separator.

In some embodiments, the binder includes at least one of polyacrylate, acrylic acid, and carboxymethyl cellulose. Any one of the above substances or a combination of any two or three of the above substances may be selected. Selecting at least one of the above substances as the binder in the coating is conducive to guaranteeing a relatively large adhesive strength between the coating and the battery separator.

In some embodiments, the material of the coating further includes a heat-resistant material. With the addition of the heat-resistant material, the thermal shrinkage resistance of the battery separator can be improved, and the thermal shrinkage of the battery separator is reduced, thereby alleviating the impact of factors such as heat generation in the battery on the performance of the battery separator.

In some embodiments, the mass ratio of the magnetic heavy metal ion adsorbent to the binder is 1:1.5-4. By controlling the addition amount of the binder relative to the magnetic heavy metal ion adsorbent within this range, the adsorption effect of the prepared coating on heavy metal ions and the adhesion between the coating and the base film can both be taken into account.

In some embodiments, the heat-resistant material includes an inorganic oxide or a polymer material. The inorganic oxide includes at least one of boehmite, aluminum oxide, barium sulfate, magnesium oxide, magnesium hydroxide, silica, tin dioxide, titanium oxide, calcium oxide, zinc oxide, zirconium oxide, yttrium oxide, nickel oxide, cerium oxide, zirconium titanate, barium titanate, and magnesium fluoride, and any one of the above substances or a combination of any two or more of the above substances may be selected. The polymer material includes at least one of polyvinylidene fluoride, polysulfonamide, polyacrylonitrile, and polymethyl methacrylate, and any one of the above substances or a combination of any two or more of the above substances may be selected. Selecting at least one of the above inorganic oxides or at least one of the above polymer materials as the heat-resistant material in the coating is conducive to improving the heat resistance of the coating, thereby improving the thermal shrinkage resistance of the battery separator, and reducing the thermal shrinkage.

In some embodiments, the mass ratio of the magnetic heavy metal ion adsorbent to the heat-resistant material is 1:3-10. By controlling the addition proportion of the heat-resistant material in the coating relative to the magnetic heavy metal adsorbent within the above range, the adsorption effect of the battery separator on heavy metal ions, the effect in helping Li$^+$ pass through the battery separator, and the heat resistance of the battery separator are all taken into account.

In some embodiments, the battery separator further includes a dispersant. The addition of the dispersant is helpful in adjusting the dispersion condition of solid substances in the coating, and promoting more uniform dispersion of the solid substances, thereby facilitating the preparation of a coating with better uniformity and improved apparent quality.

In some embodiments, the dispersant includes at least one of polyethylene glycol and polyacrylamide. Any one of the above substances or a combination of two of the above substances may be selected. Selecting at least one of the above substances as the dispersant in the coating is conducive to improving the dispersion effect of the solid substances such as the magnetic heavy metal ion adsorbent, the binder, and/or the heat-resistant material as well as the dispersion uniformity of the solid substances in the coating. Meanwhile, this is also helpful in regulating and controlling the viscosity, the fluidity, and the like of the slurry for preparing the coating, such that the subsequent processes such as coating and solidification molding of the coating are facilitated, and thus the apparent performance of the prepared coating is guaranteed.

In some embodiments, the addition amount of the dispersant is set as: the mass of the dispersant accounts for 0.4% to 1.5% of the total solid mass in the coating. Controlling the addition amount of the dispersant within this range effectively improves the dispersibility of the solid substances in the slurry, the solidification molding performance of the coating, and the like.

In some embodiments, the thickness of the coating is 1-10 $\mu$m. By setting the thickness of the coating within the range of 1-10 $\mu$m, while not affecting the battery separator's own performance, the adsorption effect of the coating on heavy metal ion impurities and its effect in accelerating the speed of Li$^+$ passing through the battery separator and helping achieve uniform distribution of Li$^+$ can be effectively guaranteed, and meanwhile, fast solidification molding of the coating is also facilitated, thereby improving the preparation efficiency.

In some embodiments, the material of the base film includes at least one of polyolefin, polyether, polyetheretherketone, polyimide, polytetrafluoroethylene, polyvinyl fluoride, polyvinylidene fluoride, polyvinylidene chloride, a polyethylene-propylene copolymer, and a C-F bond-containing copolymer. Any one of the above substances or a combination of any two or more of the above substances may be selected. By selecting at least one of the above substances as the material for the preparation of the base film, the obtained battery separator exhibits superior overall performance and has good heat resistance. It should be noted that the "at least one of the above substances is selected" means that a polyolefin film, a polyether film, a polyetheretherketone film, a polyimide film, a polytetrafluoroethylene film, a polyvinyl fluoride film, a polyvinylidene fluoride film, a polyvinylidene chloride film, a polyethylene-propylene copolymer film, or a C-F bond-containing copolymer film is selected as the base film; the "a combination of any two or more of the above substances may be selected" means that a film made of a mixture of any two or more of the above substances is selected, or a composite film synthesized by compounding of any two or more of a polyolefin film, a polyether film, a polyetheretherketone film, a polyimide film, a polytetrafluoroethylene film, a polyvinyl fluoride film, a polyvinylidene fluoride film, a polyvinylidene chloride film, a polyethylene-propylene copolymer film, and a C-F bond containing copolymer film is used as the base film.

In some specific embodiments, the thickness of the base film is 4-14 $\mu$m; and the surface density of the base film is 3-10 g/m$^2$.

In a second aspect, the present application provides a preparation method for the battery separator according to the above embodiments of the present application. The preparation method includes the following steps:

applying a functional slurry on a base film; and

solidifying the functional slurry on the base film to form a coating, thus obtaining the battery separator.

In the technical solution of the embodiments of the present application, by applying the functional slurry on the base film and solidifying to form the coating on the base film while allowing the material of the coating to include a magnetic heavy metal ion adsorbent with a saturation adsorption capacity of 30-300 mg/g, a modified battery separator is obtained. The modified battery separator has a good heavy metal adsorption function and can effectively adsorb heavy metal ion impurities and alleviate reversible specific capacity reduction and safety hazards such as short circuits of the battery caused by the metal ion impurities; in addition, after modification, the presence of the magnetic field on the surface of the battery separator can accelerate the speed of Li$^+$ passing through the battery separator and help achieve uniform distribution of Li$^+$, such that "lithium dendrite" caused by the excessively high local concentration of Li$^+$ is mitigated, thereby alleviating battery short circuits caused by "lithium dendrite", and enhancing the use safety and the service life of the battery.

In some embodiments, the functional slurry used to prepare the coating may be prepared in the following manner: the magnetic heavy metal ion adsorbent, the binder, and the heat-resistant material are added to deionized water, and the mixture is fully stirred and uniformly mixed to obtain the functional slurry. In other embodiments, the functional slurry used to prepare the coating may be prepared in the following manner: the magnetic heavy metal ion adsorbent, the binder, the heat-resistant material, and the dispersant are added to deionized water, and the mixture is fully stirred and uniformly mixed to obtain the functional slurry. The preparation method is simple and can be easily realized, which is conducive to realizing industrial production.

In some embodiments, the solid content of the functional slurry is 40%-45%. By controlling the solid content of the functional slurry within the range of 40%-45%, the solid substances in the functional slurry can be sufficiently dispersed, and the coatability and the solidification molding rate of the slurry can also be improved. As a result, the apparent performance of a coating prepared by coating with the functional slurry is improved, and the solidification speed of the coating is accelerated.

In some embodiments, the step of solidifying the functional slurry on the base film to form the coating includes: drying the base film coated with the functional slurry at a temperature of 40-45 °C for 20-25 s, which can be specifically carried out, for example, in an oven.

By solidifying the functional slurry through drying at 40-45 °C for 20-25 s to form the coating on the base film, the formed coating exhibits superior apparent quality, excellent adhesion with the base film, and rapid solidification rate. The operation is simple and industrial mass production can be easily realized.

In a third aspect, the present application provides a secondary battery. The secondary battery includes the battery separator according to the above embodiments or the battery separator prepared according to the above embodiments.

The secondary battery includes the battery separator according to the above embodiments, and also includes a positive electrode plate, a negative electrode plate, and an electrolyte. The secondary battery may be a battery cell. Taking a lithium-ion battery as an example, the lithium-ion battery cell primarily operates through the movement of lithium ions between the positive electrode plate and the negative electrode plate. In cylindrical battery cells, the trilayer film structure is wound into an electrode assembly with a cylindrical shape, while in rectangular parallelepiped battery cells, the film structure is wound or stacked into an electrode assembly with a substantially rectangular parallelepiped shape.

In a typical battery cell structure, the battery cell includes a shell, an electrode assembly, and an electrolyte. The electrode assembly is accommodated in the shell of the battery cell, and the electrode assembly includes a positive electrode plate, a negative electrode plate, and a separator. The shell includes a shell and an end cover. The shell includes an accommodating cavity formed by a plurality of walls and an opening. The end cover is disposed at the opening to close the accommodating cavity. The accommodating cavity further accommodates an electrolyte in addition to the electrode assembly. The positive electrode plate and negative electrode plate in the electrode assembly include tabs. To ensure the passing of a large current without fusing, there are a plurality of positive electrode tabs that are stacked together, and there are a plurality of negative electrode tabs that are stacked together. The tabs are electrically connected to electrode terminals located outside the battery cell via a connecting member, and the electrode terminals generally include a positive electrode terminal and a negative electrode terminal. For a rectangular parallelepiped battery cell, the electrode terminals are generally provided at the end cover. A plurality of battery cells are connected in series and/or in parallel via electrode terminals to be applied to various application scenarios.

A battery composed of a cell formed by means of winding is called a wound battery. A wound battery is also known as a cell, and industry professionals call it a jelly roll. Compared with a flat plate battery, the wound battery is formed by high-pressure winding of electrode plates with approximately 1 mm thickness. Through a specialized process, the battery is endowed with the following characteristics: superstrong high-rate discharge capability, with a maximum discharge rate of 18-30 C; excellent high/low temperature performance, capable of functioning from -55 °C to 150 °C; stable high output voltage and higher energy density; robust structure, with exceptional shock resistance; no free electrolyte (such as using colloidal acid), capable of functioning when placed in any direction; capable of fast charging, achieving over 95% charge within 40 min (at 1 C rate); ultra-long service life, capable of achieving a designed floating charge service life of no less than 8 years; and exceptional tolerance to low-current deep discharge.

The electrolyte used in the present application may be an electrolyte known in the art, which includes an organic solvent, a lithium salt, and an additive; the separator that can be used in the present application may be a separator known in the art.

The secondary battery provided by the present application incorporates all the beneficial effects of the above battery separator, which is not described in detail here.

The secondary battery may be a battery module. The battery module is designed to protect the battery cells from external impacts, heat, vibration, and the like, and is formed by electrically connecting a certain number of secondary batteries and putting the secondary batteries within a frame. A conventional battery module typically includes two end plates. A plurality of battery cells (secondary batteries) are arranged between the two end plates. The end plate with an output electrode of the battery module is also called an output electrode end plate, and the end plate without the output electrode of the battery module is also called a non-output electrode end plate.

The secondary battery may be a battery pack. In some battery production and processing technologies, a plurality of battery cells are integrated into a battery module, and then the battery module is packaged in a battery case to form the battery pack. In the battery pack, a row of a plurality of battery modules may be packaged, or a plurality of rows of battery modules may be packaged. The arrangement of the plurality of rows of battery modules may be double rows and a plurality of columns, a plurality of rows and double columns, a plurality of rows and a plurality of columns, and the like. Taking a battery pack in which double rows and a plurality of columns of battery modules are packaged as an example, the first end plate in each column is generally a head output electrode end plate, two adjacent end plates between two rows of battery modules are middle non-output electrode end plates, and the last end plate in each column is a tail non-output electrode end plate. The head output electrode end plate and one of the middle non-output electrode end plates belong to the first row of battery modules, and one of the middle non-output electrode end plates and the tail output electrode end plate belong to the second row of battery modules.

In a third aspect, the present application provides an electric device. The electric device includes the secondary battery according to the above embodiments.

The electric device provided by the present application includes, but is not limited to, a mobile phone, a portable device, a laptop, an electric bicycle, an electric vehicle, a ship, a spacecraft, an electric toy, an electric tool, and the like. For example, the spacecraft includes an airplane, a rocket, a space shuttle, a spaceship, and the like. The electric toy includes a stationary or mobile electric toy, such as a game console, an electric vehicle toy, an electric ship toy, and an electric airplane toy. The electric tool includes a metal cutting electric tool, a grinding electric tool, an assembly electric tool, and a railway electric tool, such as an electric drill, an electric grinder, an electric wrench, an electric screwdriver, an electric hammer, an impact drill, a concrete vibrator, or an electric planer.

The electric device provided by the present application incorporates all the beneficial effects of the above battery separator, which is not described in detail here.

Hereinafter, examples of the present application are described. The examples described below are illustrative and are merely used to explain the present application, and they should not be construed as limiting the present application. The examples without techniques or conditions specified therein are implemented according to techniques or conditions described in the literature in the art or according to product instructions. Reagents or instruments used herein without specified manufacturers are all commercially available conventional products.

**Example 1**

(1) Preparation of a magnetic heavy metal ion adsorbent:

1) 3 g of chitosan was dissolved in a 5% acetic acid solution and swelled for 30 min to obtain a swelling solution;

2) 4 g of triiron tetraoxide was added to the obtained swelling solution, and ultrasonic dispersion was performed for 10 min at an ultrasonic frequency of 35 kHz to obtain a dispersion;

3) 2 mL of a mixed solvent of cyclohexane and n-hexanol (at a volume ratio of 2:1) was added to the obtained dispersion, and rapid emulsification was performed for 10 min by ultrasonic treatment at an ultrasonic frequency of 90 kHz to obtain an emulsion;

4) 1 mL of pentanediol was added to the obtained emulsion, the resulting mixture was stirred and reacted for 10 min at room temperature, and then the solution was adjusted to p value of 8-9 and stirred and reacted for 4 h at room temperature; after the reaction was finished, suction filtration was performed, the obtained solid product was sufficiently washed with absolute ethanol, deionized water, and acetone sequentially and finally dried at 60 °C for 30 min under vacuum to obtain the magnetic heavy metal ion adsorbent with a core-shell structure resulting from the wrapping of the surface of triiron tetraoxide by chitosan, where the saturation adsorption capacity was 70 mg/g.

(2) Preparation of a functional slurry:

Aluminum oxide, acrylic acid, a magnetic heavy metal ion adsorbent (prepared in step (1)), and carboxymethyl cellulose were added to deionized water, where the mass ratio of the aluminum oxide to the acrylic acid to the magnetic heavy metal ion adsorbent to the carboxymethyl cellulose was 3:2:1:1, and the solid content of the slurry was controlled to be 40%; the mixture was stirred and uniformly mixed to obtain the functional slurry.

(3) Preparation of a battery separator:

The functional slurry prepared in step (2) was applied on a polypropylene base film (the thickness of the polypropylene base film was 4 $\mu$m, and the surface density was 3 g/m$^2$) through a coating machine, and then the base film was dried in an oven at a temperature of 40 °C for 20 s to solidify the slurry and thereby to form a coating with a thickness of 1 $\mu$m on the base film, thus obtaining the battery separator.

**Example 2**

(1) Preparation of a magnetic heavy metal ion adsorbent:

1) 2 g of chitosan was dissolved in a 3% acetic acid solution and swelled for 40 min to obtain a swelling solution;

2) 3 g of triiron tetraoxide was added to the obtained swelling solution, and ultrasonic dispersion was performed for 15 min at an ultrasonic frequency of 30 kHz to obtain a dispersion;

3) 1 mL of a mixed solvent of cyclohexane and n-hexanol (at a volume ratio of 2:1) was added to the obtained dispersion, and rapid emulsification was performed for 15 min by ultrasonic treatment at an ultrasonic frequency of 80 kHz to obtain an emulsion;

4) 2 mL of pentanediol was added to the obtained emulsion, the resulting mixture was stirred and reacted for 15 min at room temperature, and then the solution was adjusted to p value of 8-9 and stirred and reacted for 1 h at room temperature; after the reaction was finished, suction filtration was performed, the obtained solid product was sufficiently washed with absolute ethanol, deionized water, and acetone sequentially and finally dried at 65 °C for 30 min under vacuum to obtain the magnetic heavy metal ion adsorbent with a core-shell structure resulting from the wrapping of the surface of triiron tetraoxide by chitosan, where the saturation adsorption capacity was 64 mg/g.

(2) Preparation of a functional slurry:

Aluminum oxide, acrylic acid, a magnetic heavy metal ion adsorbent (prepared in step (1)), carboxymethyl cellulose, and polyethylene glycol were added to deionized water, where the mass ratio of the aluminum oxide to the acrylic acid to the magnetic heavy metal ion adsorbent to the carboxymethyl cellulose is 4:0.5:1:2, the solid content of the slurry was controlled to be 42%, and the mass of the polyethylene glycol accounted for 0.4% of the total solid mass in the slurry;

the mixture was stirred and uniformly mixed to obtain the functional slurry.

(3) Preparation of a battery separator:

The functional slurry prepared in step (2) was applied on a polypropylene base film (the thickness of the polypropylene base film was 7 μm, and the surface density was 5 g/m$^2$) through a coating machine, and then the base film was dried in an oven at a temperature of 42 °C for 21 s to solidify the slurry and thereby to form a coating with a thickness of 3 μm on the base film, thus obtaining the battery separator.

**Example 3**

(1) Preparation of a magnetic heavy metal ion adsorbent:

1) 4 g of chitosan was dissolved in a 4% acetic acid solution and swelled for 60 min to obtain a swelling solution;

2) 5 g of triiron tetraoxide was added to the obtained swelling solution, and ultrasonic dispersion was performed for 20 min at an ultrasonic frequency of 40 kHz to obtain a dispersion;

3) 3 mL of a mixed solvent of cyclohexane and n-hexanol (at a volume ratio of 2:1) was added to the obtained dispersion, and rapid emulsification was performed for 20 min by ultrasonic treatment at an ultrasonic frequency of 100 kHz to obtain an emulsion;

4) 2 mL of pentanediol was added to the obtained emulsion, the resulting mixture was stirred and reacted for 20 min at room temperature, and then the solution was adjusted to p value of 8-9 and stirred and reacted for 2 h at room temperature; after the reaction was finished, suction filtration was performed, the obtained solid product was sufficiently washed with absolute ethanol, deionized water, and acetone sequentially and finally dried at 70 °C for 35 min under vacuum to obtain the magnetic heavy metal ion adsorbent with a core-shell structure resulting from the wrapping of the surface of triiron tetraoxide by chitosan, where the saturation adsorption capacity was 78 mg/g.

(2) Preparation of a functional slurry:

Aluminum oxide, acrylic acid, a magnetic heavy metal ion adsorbent (prepared in step (1)), carboxymethyl cellulose, and polyethylene glycol were added to deionized water, where the mass ratio of the aluminum oxide to the acrylic acid to the magnetic heavy metal ion adsorbent to the carboxymethyl cellulose is 6:0.8:1:3, the solid content of the slurry was controlled to be 45%, and the mass of the polyethylene glycol accounted for 0.8% of the total solid mass in the slurry; the mixture was stirred and uniformly mixed to obtain the functional slurry.

(3) Preparation of a battery separator:

The functional slurry prepared in step (2) was applied on a polypropylene base film (the thickness of the polypropylene base film was 10 μm, and the surface density was 7 g/m$^2$) through a coating machine, and then the base film was dried in an oven at a temperature of 43 °C for 25 s to solidify the slurry and thereby to form a coating with a thickness of 5 μm on the base film, thus obtaining the battery separator.

**Example 4**

(1) Preparation of a magnetic heavy metal ion adsorbent:

1) 5 g of chitosan was dissolved in a 5% acetic acid solution and swelled for 80 min to obtain a swelling solution;

2) 7 g of triiron tetraoxide was added to the obtained swelling solution, and ultrasonic dispersion was performed for 25 min at an ultrasonic frequency of 30 kHz to obtain a dispersion;

3) 1 mL of a mixed solvent of cyclohexane and n-hexanol (at a volume ratio of 2:1) was added to the obtained dispersion, and rapid emulsification was performed for 25 min by ultrasonic treatment at an ultrasonic frequency of 85 kHz to obtain an emulsion;

4) 2 mL of pentanediol was added to the obtained emulsion, the resulting mixture was stirred and reacted for 25 min at room temperature, and then the solution was adjusted to p value of 8-9 and stirred and reacted for 3 h at room temperature; after the reaction was finished, suction filtration was performed, the obtained solid product was sufficiently washed with absolute ethanol, deionized water, and acetone sequentially and finally dried at 65 °C for 25 min under vacuum to obtain the magnetic heavy metal ion adsorbent with a core-shell structure resulting from the wrapping of the surface of triiron tetraoxide by chitosan, where the saturation adsorption capacity was 103 mg/g.

(2) Preparation of a functional slurry:

Aluminum oxide, acrylic acid, a magnetic heavy metal ion adsorbent (prepared in step (1)), carboxymethyl cellulose, and polyacrylamide were added to deionized water, where the mass ratio of the aluminum oxide to the acrylic acid to the magnetic heavy metal ion adsorbent to the carboxymethyl cellulose is 8:0.7:1:1.5, the solid content of the slurry was controlled to be 44%, and the mass of the polyacrylamide accounted for 1.2% of the total solid mass in the slurry; the mixture was stirred and uniformly mixed to obtain the functional slurry.

(3) Preparation of a battery separator:

The functional slurry prepared in step (2) was applied on a polypropylene base film (the thickness of the polypropylene base film was 12 $\mu$m, and the surface density was 8 g/m$^2$) through a coating machine, and then the base film was dried in an oven at a temperature of 44 °C for 23 s to solidify the slurry and thereby to form a coating with a thickness of 7 $\mu$m on the base film, thus obtaining the battery separator.

**Example 5**

(1) Preparation of a magnetic heavy metal ion adsorbent:

1) 3 g of chitosan was dissolved in a 4% acetic acid solution and swelled for 90 min to obtain a swelling solution;

2) 9 g of triiron tetraoxide was added to the obtained swelling solution, and ultrasonic dispersion was performed for 30 min at an ultrasonic frequency of 35 kHz to obtain a dispersion;

3) 3 mL of a mixed solvent of cyclohexane and n-hexanol (at a volume ratio of 2:1) was added to the obtained dispersion, and rapid emulsification was performed for 30 min by ultrasonic treatment at an ultrasonic frequency of 95 kHz to obtain an emulsion;

4) 3 mL of pentanediol was added to the obtained emulsion, the resulting mixture was stirred and reacted for 30 min at room temperature, and then the solution was adjusted to p value of 8-9 and stirred and reacted for 4 h at room temperature; after the reaction was finished, suction filtration was performed, the obtained solid product was sufficiently washed with absolute ethanol, deionized water, and acetone sequentially and finally dried at 75 °C for 30 min under vacuum to obtain the magnetic heavy metal ion adsorbent with a core-shell structure resulting from the wrapping of the surface of triiron tetraoxide by chitosan, where the saturation adsorption capacity was 75 mg/g.

(2) Preparation of a functional slurry:

Aluminum oxide, acrylic acid, a magnetic heavy metal ion adsorbent (prepared in step (1)), carboxymethyl cellulose, and polyethylene glycol were added to deionized water, where the mass ratio of the aluminum oxide to the acrylic acid to the magnetic heavy metal ion adsorbent to the carboxymethyl cellulose is 10:1:1:2.5, the solid content of the slurry was controlled to be 41%, and the mass of the polyethylene glycol accounted for 1.5% of the total solid mass in the slurry; the mixture was stirred and uniformly mixed to obtain the functional slurry.

(3) Preparation of a battery separator:

The functional slurry prepared in step (2) was applied on a polypropylene base film (the thickness of the polypropylene base film was 14 $\mu$m, and the surface density was 10 g/m$^2$) through a coating machine, and then the base film was dried in an oven at a temperature of 45 °C for 22 s to solidify the slurry and thereby to form a coating with a thickness of 10 $\mu$m on the base film, thus obtaining the battery separator.

Comparative Example 1

(1) Aluminum oxide, acrylic acid, chitosan, and carboxymethyl cellulose were added to a dispersant (polyethylene glycol), where the mass ratio of the aluminum oxide to the acrylic acid to the chitosan to the carboxymethyl cellulose was 3:1:1:1; the mixture was stirred and uniformly mixed, and the solid content was controlled to be 40%, thus obtaining the slurry.

(2) The slurry prepared in step (1) was applied on a polypropylene base film (the thickness of the polypropylene base film was 4 $\mu$m, and the surface density was 3 g/m$^2$), and then the base film was dried in an oven at a temperature of 40 °C for 20 s to solidify the slurry and thereby to form a coating with a thickness of 5 $\mu$m on the base film, thus obtaining the battery separator.

Comparative Example 2

A polypropylene film with a thickness of 4 $\mu$m and a surface density of 3 g/m$^2$ was used as a battery separator.

Performance Testing

1. Adsorption performance:

The battery separators prepared in the Examples and the Comparative Example were each placed between two liquid chambers, the left liquid chamber contained a pure ethylene carbonate solution, and the right liquid chamber contained a 100 ppm copper chloride ethylene carbonate solution or a 100 ppm ferric chloride ethylene carbonate solution. The battery separators were left to stand for 12 h, the content of copper ions or iron ions was measured by atomic absorption spectroscopy, and the test results are shown in Table 1 below.

Table 1. Heavy metal ion adsorption performance of battery separators prepared in Examples and Comparative Example

| | Original concentration of heavy metal ions (ppm) | Final concentration of heavy metal ions (ppm) | |
| --- | --- | --- | --- |
| | | Copper ion | Iron ion |
| Example 6 | 100 | 2.3 | 17.9 |
| Example 7 | 100 | 2.1 | 18.4 |
| Example 8 | 100 | 2.9 | 17.5 |
| Example 9 | 100 | 3.2 | 17.0 |
| Example 10 | 100 | 2.5 | 18.8 |
| Comparative Example 1 | 100 | 10.3 | 34.2 |

As can be seen from the results in Table 1, since magnetic materials are added to the coating applied on the surface of the battery separators prepared in the Examples of the present application, compared with the battery separator without the magnetic material added thereto in the Comparative Example 1, the battery separators with the magnetic materials added thereto in the present application exhibit higher adsorption capacity for heavy metal ions, which indicates that the adsorption capacity of the battery separator for heavy metal ions is effectively improved by the addition of the magnetic material.

2. Heat resistance:

The battery separators prepared in the Examples and the Comparative Example were each punched by a punching machine to form rectangles with a size of 100 mm×100 mm, placed in ovens at 105 °C, 130 °C, and 150 °C, and sampled after 1 h. The sizes thereof were measured, and the thermal shrinkage was calculated. The calculation of the thermal shrinkage is as follows:

$$\text{Thermal shrinkage rate} = \frac{\text{Initial size - Size after baking}}{\text{Initial size}} \times 100\%$$

The calculation results of the thermal shrinkage of the battery separators prepared in the Examples and the Comparative Example are shown in Table 2 below.

Table 2. Thermal shrinkage of battery separators prepared in Examples

|  | Oven temperature (°C) | Thermal shrinkage (%) |
|---|---|---|
| Example 6 | 105 | 0.17 |
|  | 130 | 0.97 |
|  | 150 | 1.03 |
| Example 7 | 105 | 0.18 |
|  | 130 | 0.91 |
|  | 150 | 0.99 |
| Example 8 | 105 | 0.15 |
|  | 130 | 1.04 |
|  | 150 | 1.02 |
| Example 9 | 105 | 0.23 |
|  | 130 | 0.94 |
|  | 150 | 1.03 |
| Example 10 | 105 | 0.15 |
|  | 130 | 1.12 |
|  | 150 | 1.09 |
| Comparative Example 2 | 105 | 2.3 |
|  | 130 | 4.1 |
|  | 150 | 4.5 |

As can be seen from the results in Table 2, compared with the scheme of using the polypropylene film as the battery separator in Comparative Example 2, the battery separators prepared in Examples 1-5 of the present application exhibit good heat shrinkage resistance by providing, on the surface of the polypropylene base film, a coating to which a magnetic heavy metal ion adsorbent, a binder, a heat-resistant material, and the like are added for modification, which indicates that the battery separator provided by the present application can not only achieve effective adsorption of heavy metal ions by the battery separator, but also can improve the thermal shrinkage resistance of the battery separator.

The above examples are only preferred examples of the present application and are not intended to limit the patent scope of the present application. For those skilled in the art, the present application can be modified and varied. Any modification, equivalent substitution, improvement, and the like made within the spirit and principle of the present application shall all fall within the patent protection scope of the present application.

**Claims**

1.    A battery separator, wherein the battery separator comprises a base film and a coating disposed on a surface of the base film, wherein a material of the coating comprises a magnetic heavy metal ion adsorbent, and a saturation adsorption capacity of the magnetic heavy metal ion adsorbent is 30-300 mg/g.

2. The battery separator according to claim 1, wherein the magnetic heavy metal ion adsorbent is in a form of a particle, the magnetic heavy metal ion adsorbent comprises an inner core and an outer wall wrapped outside the inner core, a material of the inner core comprises a magnetic material, and a material of the outer wall comprises an adsorption material.

3. The battery separator according to claim 2, wherein the magnetic material comprises at least one of triiron tetraoxide, ferric oxide, and an iron-nickel-cobalt-based alloy.

4. The battery separator according to claim 2, wherein the adsorption material comprises at least one of chitosan, alginate, and cellulose.

5. The battery separator according to claim 2, wherein a thickness of the outer wall is 0.01-1 $\mu$m; and/or
a particle size of the magnetic heavy metal ion adsorbent is 0.1-10 $\mu$m.

6. The battery separator according to any one of claims 1 to 5, wherein the magnetic heavy metal ion adsorbent is used for adsorbing at least one of a copper ion and an iron ion.

7. The battery separator according to claim 1, wherein the material of the coating further comprises a binder.

8. The battery separator according to claim 7, wherein the binder comprises at least one of polyacrylate, acrylic acid, and carboxymethyl cellulose; and/or
a mass ratio of the magnetic heavy metal ion adsorbent to the binder is 1:1.5-4.

9. The battery separator according to claim 1, where the material of the coating further comprises a heat-resistant material.

10. The battery separator according to claim 9, wherein the heat-resistant material comprises:

an inorganic oxide, wherein the inorganic oxide comprises at least one of boehmite, aluminum oxide, barium sulfate, magnesium oxide, magnesium hydroxide, silica, tin dioxide, titanium oxide, calcium oxide, zinc oxide, zirconium oxide, yttrium oxide, nickel oxide, cerium oxide, zirconium titanate, barium titanate, and magnesium fluoride; or
a polymer material, wherein the polymer material comprises at least one of polyvinylidene fluoride, polysulfonamide, polyacrylonitrile, and polymethyl methacrylate.

11. The battery separator according to claim 9, wherein a mass ratio of the magnetic heavy metal ion adsorbent to the heat-resistant material is 1:3-10.

12. The battery separator according to claim 1, wherein a material of the battery separator further comprises a dispersant.

13. The battery separator according to claim 12, wherein the dispersant comprises at least one of polyethylene glycol and polyacrylamide; and/or
a mass of the dispersant accounts for 0.4%-1.5% of a total solid mass in the coating.

14. The battery separator according to claim 1, wherein a material of the base film comprises at least one of polyolefin, polyether, polyetheretherketone, polyimide, polytetrafluoroethylene, polyvinyl fluoride, polyvinylidene fluoride, polyvinylidene chloride, a polyethylene-propylene copolymer, and a C-F bond-containing copolymer.

15. A preparation method for the battery separator according to any one of claims 1 to 14, wherein the preparation method comprises the following steps:

applying a functional slurry on a base film; and
solidifying the functional slurry on the base film to form a coating, thus obtaining the battery separator.

16. The preparation method for the battery separator according to claim 15, wherein a solid content of the functional slurry is 40%-45%.

17. The preparation method for the battery separator according to claim 15, wherein the step of solidifying the functional slurry on the base film to form the coating comprises:
drying the base film coated with the functional slurry at a temperature of 40-45 °C for 20-25 s.

18. A secondary battery, wherein the secondary battery comprises the battery separator according to any one of claims 1 to 14 or a battery separator prepared by the preparation method for the battery separator according to any one of claims 15 to 17.

19. An electric device, wherein the electric device comprises the secondary battery according to claim 18.

FIG. 1

# INTERNATIONAL SEARCH REPORT

| International application No. |
|---|
| **PCT/CN2023/140740** |

**A. CLASSIFICATION OF SUBJECT MATTER**

H01M50/449(2021.01)i; H01M50/443(2021.01)i; H01M50/446(2021.01)i; H01M10/0525(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; ISI: 宁德时代新能源, 电池, 隔膜, 涂层, 磁性, 吸附, 金属离子, 四氧化三铁, 三氧化二铁, 铁, 镍, 钴, 合金, battery, separator, coating layer, magnetism, adsorption, metal+ ion, Fe3O4, Fe2O3, Fe, Ni, Co, ferroferric oxide, ferric oxide, iron, cobalt, nickel, alloy

**C. DOCUMENTS CONSIDERED TO BE RELEVANT**

| Category* | Citation of document, with indication, where appropriate, of the relevant passages | Relevant to claim No. |
|---|---|---|
| X | CN 109346647 A (SUN YAT-SEN UNIVERSITY) 15 February 2019 (2019-02-15) description, paragraphs [0002]-[0056] | 1, 7-19 |
| A | CN 107081138 A (SHANGHAI UNIVERSITY OF ENGINEERING SCIENCE) 22 August 2017 (2017-08-22) entire document | 1-19 |
| A | CN 111029514 A (ZHUHAI GUANYU BATTERY CO., LTD.) 17 April 2020 (2020-04-17) entire document | 1-19 |
| A | CN 113937418 A (NANJING IPE INSTITUTE OF GREEN MANUFACTURING INDUSTRY) 14 January 2022 (2022-01-14) entire document | 1-19 |
| A | CN 113851785 A (SHAANXI UNIVERSITY OF SCIENCE AND TECHNOLOGY) 28 December 2021 (2021-12-28) entire document | 1-19 |
| A | CN 114566754 A (XI'AN UNIVERSITY OF TECHNOLOGY) 31 May 2022 (2022-05-31) entire document | 1-19 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 February 2024** | **07 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/140740**

### C.    DOCUMENTS CONSIDERED TO BE RELEVANT

| Category* | Citation of document, with indication, where appropriate, of the relevant passages | Relevant to claim No. |
|---|---|---|
| A | CN 108649174 A (CHINA AVIATION LITHIUM BATTERY RESEARCH INSTITUTE CO., LTD. et al.) 12 October 2018 (2018-10-12) <br> entire document | 1-19 |
| A | KR 20140054769 A (LG CHEMICAL LTD.) 09 May 2014 (2014-05-09) <br> entire document | 1-19 |
| A | CN 108110193 A (HUIQIANG (WUHAN) NEW ENERGY MATERIAL TECHNOLOGY CO., LTD.) 01 June 2018 (2018-06-01) <br> entire document | 1-19 |
| A | CN 108057423 A (NORTHWESTERN POLYTECHNIC UNIVERSITY) 22 May 2018 (2018-05-22) <br> entire document | 1-19 |

Form PCT/ISA/210 (second sheet) (July 2022)

**INTERNATIONAL SEARCH REPORT**
**Information on patent family members**

International application No.

**PCT/CN2023/140740**

| Patent document cited in search report | | | Publication date (day/month/year) | Patent family member(s) | | | Publication date (day/month/year) |
|---|---|---|---|---|---|---|---|
| CN | 109346647 | A | 15 February 2019 | CN | 109346647 | B | 01 September 2020 |
| CN | 107081138 | A | 22 August 2017 | None | | | |
| CN | 111029514 | A | 17 April 2020 | WO | 2021093774 | A1 | 20 May 2021 |
| | | | | US | 2022271329 | A1 | 25 August 2022 |
| | | | | EP | 4050710 | A1 | 31 August 2022 |
| | | | | EP | 4050710 | A4 | 21 December 2022 |
| | | | | CN | 114641890 | A | 17 June 2022 |
| | | | | CN | 111029514 | B | 28 September 2021 |
| CN | 113937418 | A | 14 January 2022 | CN | 113937418 | B | 17 November 2023 |
| CN | 113851785 | A | 28 December 2021 | None | | | |
| CN | 114566754 | A | 31 May 2022 | None | | | |
| CN | 108649174 | A | 12 October 2018 | None | | | |
| KR | 20140054769 | A | 09 May 2014 | KR | 101736376 | B1 | 29 May 2017 |
| CN | 108110193 | A | 01 June 2018 | CN | 108110193 | B | 02 March 2021 |
| CN | 108057423 | A | 22 May 2018 | CN | 108057423 | B | 03 July 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310369612